# EUROPEAN PATENT APPLICATION

(11) **EP 2 281 674 A1**
(43) Date of publication of application: **09.02.2011**
(21) Application number: 10166712.9
(22) Date of filing: 21.06.2010
(51) Int. Cl.: B29C 45/14, B32B 27/08

(54) **Compound material article and method of manufacturing the same**

(30) Priority: 31.07.2009 CN 200910305058
(71) Applicant: Hon Hai Precision Industry Co., Ltd., Tu-cheng City, Taipei Hsien (TW)
(72) Inventor: Chang, Chun-Yuan, Tu-chen City Taipei (TW); Tseng, Chung-Chi, Tu-chen City Taipei (TW)
(74) Representative: Gray, John James

(57) **Abstract**

A compound material article and a method of manufacturing the same are disclosed. The compound material article includes a substrate molded by compound materials, and a film attached to a surface of the substrate. The film is capable of being painted different patterns or characters on a surface opposite to the substrate.

## Description

### BACKGROUND

### 1. Technical Field

The disclosure relates to compound material articles and a method of manufacturing the same.

### 2. Description of Related Art

For reinforcing a plastic article, fibers are usually added to the plastic. A conventional compound material article formed by injection has a coarse surface because of fibers at the surface of the compound material article. It is difficult to decorate the coarse surface.

### BRIEF DESCRIPTION OF THE DRAWINGS

FIG. 1 is a flowchart of an embodiment of a method for manufacturing a compound material article.

FIGS. 2-5 are cross-sectional views of several embodiments of a compound material article.

### DETAILED DESCRIPTION

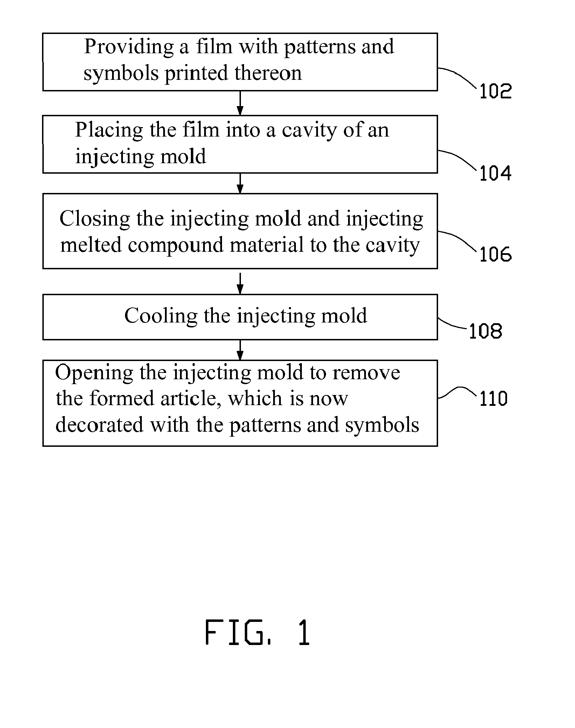

Referring to FIG. 1, an embodiment of a method is utilized to manufacture a compound material article decorated with patterns and/or symbols such as characters.
The method includes the following steps:
Step 102, providing a film with patterns and symbols printed thereon;
Step 104, placing the film into a cavity of an injecting mold;
Step 106, closing the injecting mold and injecting melted compound material into the cavity. The melted compound material is in contact with the film. The compound material includes basic material, and additive material. The additive material is generally made of carbon fiber and fiberglass. The basic material is generally made of one or more of Polycarbonate (PC), Acrylonitrile-butadienestyrene (ABS), and nylon 66 (PA66). The percent content of the additive material relative to total volume of the compound material may range from about 5% to 65%;
Step 108, cooling the injecting mold;
Step 110, opening the injecting mold to remove the formed article, which is now decorated with the patterns and symbols.

The method of the disclosure can be used to form enclosures of different notebook computers, mobile phones, and so on, with different patterns and characters thereon.

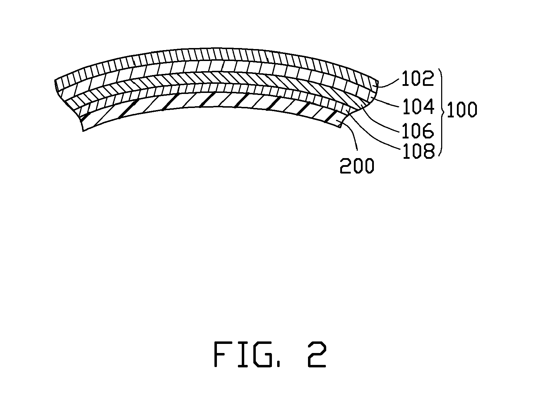

Referring to FIG. 2, in a first embodiment, the formed compound material article includes a film 100, and a substrate 200. The film 100 is attached to a surface of the substrate 200. The film 100 includes a base layer 102, a first attaching layer 104, a pattern layer 106, and a second attaching layer 108. The pattern layer 106 includes different patterns and characters formed thereon. The substrate 200 is molded by the compound material.

The base layer 102 is used for protecting the formed compound material article from wear. The base layer 102 is generally made of one or more of Polycarbonate (PC), Polyethylene Terephthalate (PET), acrylic (PMMA), Oriented Polypropylene (OPP) and PolyvinylChloride (PVC), for example. In this embodiment, the thickness of the base layer 102 ranges from about 0.038 millimeters to 0.5 millimeters.

The pattern layer 106 is provided by printing ink on the first attaching layer 104. A metal decoration layer can also be provided as the pattern layer 106 via plating any of aluminum, chromium, copper, nickel, indium, and tin, alone or in combination, on the base layer 102 via vacuum evaporation method or electroplating method.

The first attaching layer 104 is arranged between the base layer 102 and the pattern layer 106. The second attaching layer 108 is arranged between the pattern layer 106 and the substrate 200 for attaching the film 100 to the substrate 200.

The first and second attaching layers 104, 108 may be made from materials selected from the group consisting of acrylic resin, nitrification fiber resin, polyamine formate resin, chlorination rubber resin, vinyl chloride-co-vinyl-acetic ester copolymer resin, polyamide resin, polyester resin, epoxy resin, polycarbonate resin, olefin resin, acrylonitrile-butylene-styrene monomer resin, for example. In this embodiment, the thickness of the second attaching layer 108 may range from about 0.0005 millimeters to 0.5 millimeters. The second attaching layer 108 is generally provided via concave printing, screen printing, offset printing, spraying method, dip coating method, coating in reverse order method and so on.

The base layer 102 may be transparent or translucent to view the patterns and/or colors of the pattern layer 106.

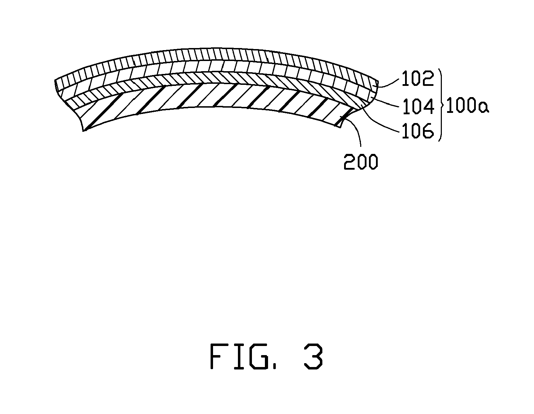

Referring to FIG. 3, in a second embodiment, the compound material article includes a substrate 200, and a film 100a. The film 100a includes a base layer 102, a first attaching layer 104, and a pattern layer 106. Alternatively, the film 100a may include a base layer 102, a pattern layer 106, and a second attaching layer 108.

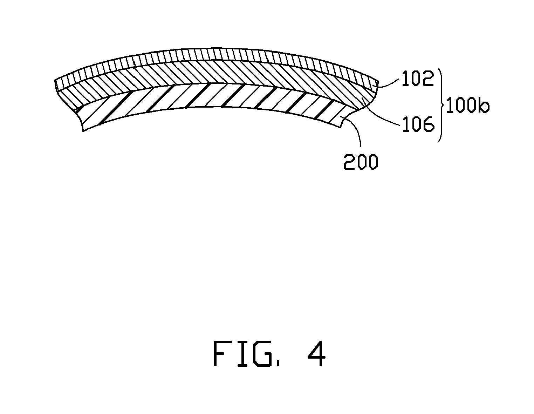

Referring to FIG. 4, in a third embodiment, the compound material article includes a substrate 200, and a film 100b. If the basic material of the compound material and the material of the base layer 102 of the film are same, the film 100b may include a base layer 102 and a pattern layer 106.

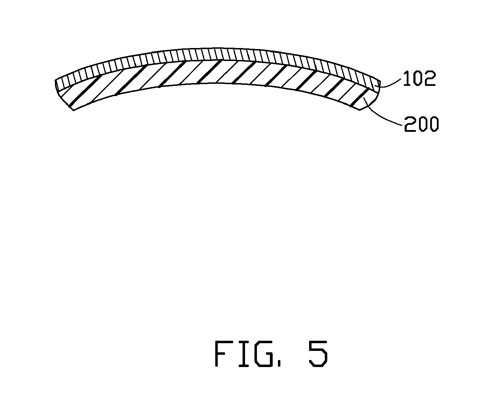

Referring to FIG. 5, in a fourth embodiment, the compound material article includes a substrate 200 and a base layer 102 for viewing the natural color of the substrate 200 via the transparent or translucent base layer 102. In this embodiment, the base layer 102 may be made of colored material, for giving color to the formed compound material article.

It is believed that the present embodiments and their advantages will be understood from the foregoing description, and it will be apparent that various changes may be made thereto without departing from the spirit and scope of the description or sacrificing all of its material advantages, the examples hereinbefore described merely being exemplary embodiments.

## Claims

1. A compound material article, comprising:
a substrate molded by compound material; and
a film attached to a surface of the substrate.

2. The compound material article of claim 1, wherein the film comprises a base layer, a pattern layer, a first attaching layer arranged between the base layer and the pattern layer, and a second attaching layer arranged between the substrate and the pattern layer.

3. The compound material article of claim 1, wherein the film comprises a base layer, and a pattern layer arranged between the base layer and the substrate.

4. The compound material article of claim 1 or 3, wherein the film comprises a base layer, a pattern layer, and a first attaching layer arranged between the base layer and the pattern layer.

5. The compound material article of claim 1, 3 or 4, wherein the film comprises a base layer, a pattern layer, and a second attaching layer arranged between the substrate and the pattern layer.

6. The compound material article of claim 5, wherein a thickness of the second attaching layer ranges from about 0.0005 millimeters to 0.5 millimeters.

7. The compound material article of any preceding claim, wherein the film comprises a base layer attached to the substrate plate.

8. The compound material article of any of claims 2 to 7, wherein a thickness of the base layer ranges from about 0.038 millimeters to 0.5 millimeters.

9. The compound material article of any of claims 2 to 8, wherein the base layer is transparent or translucent for viewing the natural color of the substrate.

10. The compound material article of any preceding claim, wherein the compound material comprises basic material, and additive material, the additive material is fiber, the basic material is made of one or more of Polycarbonate, Acrylonitrile-butadienestyrene, and nylon 66.

11. The compound material article of claim 10, wherein the percent content of the additive material relative to total volume of the compound material ranges from about 5% to 65%.

12. A method for forming a compound material article, comprising:
providing a film with patterns and symbols printed thereon;
placing the film into a cavity of an injecting mold;
closing the injecting mold and injecting melted compound material into the cavity;
cooling the injecting mold; and
opening the injecting mold to remove the formed article, which is now decorated with the patterns and symbols.

13. The method of claim 12, wherein the compound material comprises basic material, and additive material, the additive material is fiber, the basic material is made of one or more of Polycarbonate, Acrylonitrile-butadienestyrene, and nylon 66.

14. The method of claim 13, wherein the percent content of the additive material relative to total volume of the compound material ranges from about 5% to 65%.
